# EUROPEAN PATENT APPLICATION

(11) **EP 4 506 624 A1**
(43) Date of publication of application: **12.02.2025**
(21) Application number: 24192234.3
(22) Date of filing: 01.08.2024
(51) Int. Cl.: F24D 17/00, F24H 15/212, F24H 15/32, F24H 15/395, F24H 15/421, E03C 1/00

(54) **ENERGY RECOVERY SYSTEM**

(30) Priority: 07.08.2023 IT 202300016908
(71) Applicant: Eberle, Matteo, 31053 Pieve di Soligo (TV) (IT); Eberle, Luca, 31020 Villorba (TV) (IT)
(72) Inventor: Eberle, Matteo, 31053 Pieve di Soligo (TV) (IT); Eberle, Luca, 31020 Villorba (TV) (IT)
(74) Representative: Citron, Massimiliano

(57) **Abstract**

A method for recovering heat from waste water is described which travels through at least one waste conduit to be disposed of. The method envisages that the temperature of the water sent into the conduit is measured, and the flow of the water in the conduit is diverted to send it either inside one of two or more accumulations of water, or towards a drainage route, as a function of the order relationship between the measured temperature and temperature thresholds. If the measured water temperature is lower than a first temperature threshold, the water is diverted into the drainage route, if the measured water temperature is higher than the first temperature threshold but lower than a second temperature threshold higher than the first, the water is diverted into one of the two accumulations, and if the measured water temperature is higher than the second temperature threshold, the water is diverted into the other accumulation.

## Description

The invention relates to an energy recovery system or plant for recovering thermal energy from waste water, e.g. of a building or machinery.

Energy saving, renewable sources and nuclear energy are increasingly at the center of attention. Think for example that approximately 23% of fuel consumption is used for room heating, while the remainder is used for other things, such as heating domestic water, thermoelectric power plants, industrial complexes, etc.

Domestic boilers emit fumes at 100/120 C° or between 130 and 220 C°; and even the fumes coming out of industrial plants have temperatures that reach 1200°C. Much of this heat can advantageously be recovered with known systems.

However, an efficient system for the recovery of residual heat in hot waste water sent to the sewer from an inhabited building is missing.

The main object of the invention is therefore to propose a system and method for recovering residual heat from hot waste water, e.g. of a building, which flows towards a sewer or a discharge or disposal point. The system and method is defined in the attached claims, wherein the dependent claims define advantageous variants of the invention.

The concept of the invention is applicable to residential or industrial buildings, or to the exhaust of a machine, or in general where there is waste or disposal water at a temperature higher than the environment temperature.

An aspect of the invention concerns a method for recovering heat from waste water, e.g. water of a building leaving the building or waste water of a machine, which passes through at least one waste conduit for disposal, wherein
- the temperature of the water sent into the conduit is measured, and
- the path of the water in the conduit is diverted to send it
   either within one of two or more accumulations of water,
   or towards a drainage route (e.g. directly into a drain without recycling),
   as a function of the order relationship between the measured temperature
   and temperature thresholds, wherein
- if the measured water temperature is lower than a first temperature threshold the water is diverted into the drainage route,
- if the measured water temperature is higher than the first temperature threshold but lower than a second temperature threshold higher than the first, the water is diverted into one of the two accumulations, and
- if the measured water temperature is higher than the second temperature threshold, the water is diverted into the other accumulation.

With the proposed method, the mixing of waste water at different temperatures is minimized and the thermal energy contained and stored inside the accumulations is consequently maximized. The hot waste water continues to maintain a desired temperature inside each accumulation, and the thermal energy stored in the accumulations can be better exploited for energy recovery.

Advantageously, the method can be extended to M accumulations of water, M >= 3, wherein the aforementioned water deviation logic occurs by
comparing the measured water temperature with M increasing temperature thresholds Sᵢ, 1 <= i <= M, which define M+1 temperature ranges, and
diverting the flow of water
   - towards the drainage route if the measured water temperature is lower than the lowest temperature threshold S₁ among the M thresholds,
   - inside the j-th accumulation, 1 <= j <= M-1, if the measured water temperature is greater than the j-th temperature threshold Sⱼ and lower than the (j+1)-th temperature threshold S_{j +1}, and
   - inside the M-th accumulation if the measured water temperature is greater than highest temperature threshold S_{M}.

In this way the temperature of the water inside the M-1 accumulations is maintained in a range established by two increasing temperature thresholds, and the water temperature inside the M-th accumulation remains higher than the highest temperature threshold S_{M}. Note that the method allows the final temperature of the water contained in the M accumulations to be set regardless of their relative physical location.

The greater the M temperature separations, the more the result of energy recovery is maximized.

Preferably the aforementioned decision to divert the path of the water, and/or the calculation of the order relationship and/or the relative comparison between temperature values, takes place by means of an electronic circuit, and preferably automatically.

A preferred way for energy recovery envisages removing heat from the water of the accumulations and transferring it to the water of a water circuit (for reuse of the heat recovered from the accumulations).

Preferably the water circuit is a closed circuit, for maximum reuse.

The water heated in the aforementioned circuit can then be exploited in various ways, e.g. to replenish water of a boiler or furnace, or for washing or cooking, etc.

Preferably, the water circuit originates from a public aqueduct and ends in a boiler or furnace that supplies hot water to the building. Thus the boiler or furnace receives preheated water from the aqueduct, and consumption to heat the water is reduced.

Preferably, heat is removed from each accumulation via heat exchange, e.g. via the water circuit.

More preferably, heat is taken from the water of each accumulation by sequentially passing through the water contained in some or each accumulation, e.g. via the water circuit.

Even more preferably, all or some of the accumulations are crossed in sequence respecting the sequence of increasing temperature of the water contained therein, so that, leaving one accumulation, another accumulation with water at a higher temperature is always encountered. That is, one starts from the accumulation containing water at the lowest temperature and ends with the accumulation containing water at the highest temperature. This solution maximizes heat exchange. In some applications, a countercurrent system can also be created by reversing the crossing order, i.e. one starts from the accumulation containing water at the highest temperature and ends with the accumulation containing water at the lowest temperature. The crossing of the accumulations preferably occurs via the water circuit.

Another aspect of the invention concerns a system or plant for recovering heat from waste water inside a drainage conduit. The system or plant is also adapted for carrying out the aforementioned method and comprises:
- two water tanks,
- a sensing device for determining the temperature of the water sent to the drainage conduit,
- a diverter device configured to divert the path of the water flowing inside the conduit to send it into one of the tanks or towards a drainage route (e.g. directly towards a throw-away drain).

By an electronic circuit, the selection of water may be automated. The electronic circuit is then configured for controlling the diverter device as a function of the comparison between the temperature detected by the sensing device and temperature thresholds, so that
- if the measured water temperature is lower than a first temperature threshold, the electronic circuit controls the diverter device so that the water is diverted into the drainage route,
- if the temperature of the measured water is higher than the first temperature threshold but lower than a second temperature threshold higher than the first, the electronic circuit controls the diverter device so that the water is diverted into one of the two tanks, and
- if the temperature of the water measured in the conduit is higher than the second temperature threshold, the electronic circuit controls the diverter device so that the water is diverted into the other storage tank.

Advantageously, the system can be extended to M water accumulations, M >= 3. The electronic circuit in this case is configured to
- compare the water temperature with M increasing temperature thresholds Sᵢ, 1 <= i <= M, which define M+1 temperature ranges, and
- drive the diverter device to divert the water flow
   towards the drainage route if the measured water temperature is lower than the lowest temperature threshold S₁ among the M thresholds,
   inside the j-th accumulation, 1 <= j <= M-1, if the measured water temperature is greater than the j-th temperature threshold Sⱼ and lower than the (j+1)-th temperature threshold S_{j +1}, and
   inside the M-th accumulation if the measured water temperature is greater than the highest temperature threshold S_{M}.

Preferably for the reuse of the heat recovered in the accumulations, the system or plant comprises a water circuit, more preferably a closed circuit.

Preferably, the water circuit originates from a public aqueduct and ends in a boiler or furnace that supplies hot water to the building.

Preferably, the system comprises heat exchangers installed inside some or each accumulation, and the water circuit is configured to withdraw heat from the water of the accumulations by passing sequentially through the heat exchangers contained in the accumulations.

Even more preferably, the water circuit is configured to sequentially pass through the accumulations, e.g. all, respecting the sequence of increasing temperature of the water contained in them, so that, leaving one accumulation the circuit always encounters another accumulation with water at a higher temperature.

In the method and in the plant preferably:
said drainage route comprises the direct delivery to a throw-away drain or to a settling tank; and/or
the temperature of the water flowing through the conduit is measured before the insertion thereof into the conduit or directly inside the conduit while it is flowing through it; and/or
the order relationship (higher or lower) between the measured water temperature and the temperature thresholds is calculated by the difference, and/or the sign of the difference, between the measured water temperature and said thresholds, and/or
one or each accumulation is made with a tank; and/or
advantageously, the inventive concept may be extended to N conduits, N >= 2, wherein for each of the N conduits the aforementioned water diversion logic is implemented.

The advantages of the method and the system will however be clearer from the following description of one of its preferred embodiments, referring to the attached drawing in which
- Fig. 1 shows a diagram of an energy recovery system;
- Fig. 2 shows a detail of an energy recovery system diagram.

In the drawings the arrows indicate the flow direction of the water, and equal numbers indicate equal elements.

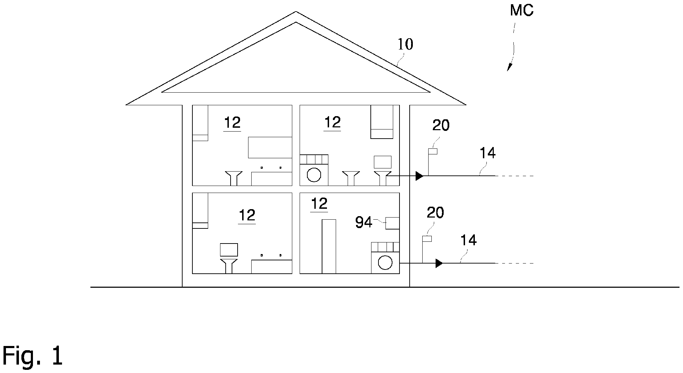

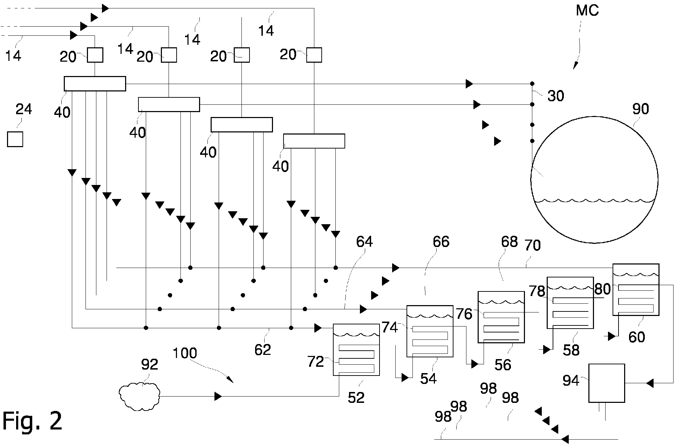

An energy recovery system MC (fig. 1) is applied to a building 10 comprising in various rooms known drains 14 for the used water. There are a plurality of drains and for simplicity only some of them will be illustrated, but it is understood that the system described preferably applies to drains 14 of all rooms 12 and/or to an indefinite number of drains 14. Each drain 14 (fig. 2) arrives at a respective flow diverter 40. In proximity of each flow diverter 40 or each drain 14 there is a temperature sensor 20 for measuring the temperature of the water in that drain 14 (or entering the diverter 40).

The system MC also comprises a throw-away tank 90, e.g. having a drain towards a sewer, and Q water accumulation tanks 52, 54, 56, 58, 60. In general Q >= 2, and the example shows the case Q = 5.

The diverter 40 is adapted to selectively direct the flow of water at its inlet towards Q+1 outlets ((Q+1)-way diverter). By each diverter 40 the water can be sent selectively either into a conduit 30 leading to the tank 90, or inside one of the Q tanks 52, 54, 56, 58, 60 via a respective conduit 62, 64, 66, 68, 70.

The sensors 20 and the diverters 40 are preferably connected and controlled by an electronic control unit 24, programmed and/or configured to detect the temperatures of the sensors 20 and accordingly control the diverters 40.

The operating logic of the system MC and/or the control unit 24 is as follows.

The water temperature detected by the sensor 20 of each conduit 14, here called Ts, is compared with Q increasing temperature thresholds S1, S2; S3; S4 and S5,
with S1 < S2 < S3 < S4 < S5.
E.g. S1 = 30 °C, S2 = 45 °C, S3 = 60 °C, S4 = 75 °C and S5 = 90 °C.

The configuration of the diverter 40 is controlled as a function of the result of the comparison, and therefore the outlet towards which the water arriving in the conduit 14 will be directed.

If Ts < S1, the diverter 40 is driven to send the water into the conduit 30.

If Ts >= S1 and Ts < S2, the diverter 40 is driven to send the water into the conduit 52.

If Ts >= S2 and Ts < S3, the diverter 40 is driven to send the water into the conduit 54, and so on.

If Ts >= S5, the diverter 40 is driven to send the water into the conduit 60.

The algorithmic decision is not influential in case of equality between Ts and Sᵢ, i = 1, 2, ..., Q (i.e. the previous decisions can hold with or without the equality signs).

It follows that the Q tanks 52, 54, 56, 58, 60 end up containing water having a temperature within a range of values, and in particular never at a temperature lower than the threshold S1. The availability of hot water at various temperatures promotes energy recovery.

Preferably inside each tank 52, 54, 56, 58, 60 a heat exchanger 72, 74, 76, 78, 80 is installed, e.g. a coil or a tube bundle. The type of exchanger is not essential.

The heat exchangers 72, 74, 76, 78, 80 are preferably placed in series (the outlet of one is the inlet of the next) and inserted into a water circuit 100. The first in the series is fed e.g. from a source of cold water 92, such as for example the public aqueduct, and the last in the series supplies a user 94, e.g. a boiler or a furnace. Note that through the diverters 40 and the choice of the Q thresholds Sᵢ it is possible to determine a desired sequence of temperatures for the water in the tanks 52, 54, 56, 58, 60.

E.g. the temperatures of the water in the tanks 52, 54, 56, 58, 60 can form an increasing or decreasing sequence according to the order of the sequence of tanks crossed by the circuit 100 towards the user 94. Therefore, for example, for the temperature T1 of the water in the tank 52 it is S1 < T1 < S2, for the temperature T2 of the water in the tank 54 it is S2 < T2 < S3, and so on, and for the temperature T5 of the water in the tank 60 it is T5 > S5. Or the coldest water can be in the tank 60 and the warmest water in the tank 52.

By choosing the appropriate temperature sequence for the water contained in the tanks 52, 54, 56, 58, 60 it is possible to maximize the heat exchange with the circuit 100, and therefore the energy recovery efficiency.

Preferably the user 94 distributes hot water into conduits 98 which circulate hot or hotter water, preferably back water to the building 10, more preferably by forming a closed water circuit.

Preferably the user 94 feeds downstream, through conduits 98, devices of the building 10 which deliver or use hot or lukewarm water (in any case hotter than the water from the source 92).

Advantageously, if the user 94 is a device that withdraws water from the source 92 to heat it and send it to the building 10, the energy consumption of the user 94 is reduced because the water at its inlet is on average warmer than the water of the source 92, ergo the user 94 no longer has to raise the water temperature starting from a low temperature and consumes less fuel.

The diverter 40 may be mounted on the drain conduit of each room or water user of the building 10, or, to limit the number of diverters, on a common vertical drain column to which the drains of the water users of each floor of the building 10 are joined.

For the location of the aforementioned tanks, they may be e.g. buried or arranged in the basement of the building 10.

The use of the control unit 24 makes the system automatic, but it is not necessary. It is possible for example to provide a display that indicates the temperatures detected by the sensors 20 and the diverter 40 can be activated manually by a user.

The type of sensors 20 is not essential, it is sufficient to be able to detect the temperature of the water in the conduit 14 or before it is introduced there.

Note the advantage of not having to measure the temperature in the tanks 52, 54, 56, 58, 60.

To maintain a constant level of water in the tanks 52, 54, 56, 58, 60 they may be equipped with a drain, e.g. an overflow or a siphon drain, towards a throw-away well well or e.g. towards the tank 90 or towards the user 94 (connection not shown for simplicity).

The energy recovery system MC may also be applied to waste water of machinery, with the same operating logic.

## Claims

1. Method for recovering heat from waste water, e.g. water from a building leaving the building or waste water from machinery, which travels through at least one waste conduit to be disposed of, wherein
the temperature of the water sent into the conduit is measured, and
the flow of the water in the conduit is diverted to send it
either inside one of two or more accumulations of water,
or towards a drainage route,
as a function of the order relationship between the measured temperature and temperature thresholds, wherein
- if the measured water temperature is lower than a first temperature threshold, the water is diverted into the drainage route,
- if the measured water temperature is higher than the first temperature threshold but lower than a second temperature threshold higher than the first, the water is diverted into one of the two accumulations, and
- if the measured water temperature is higher than the second temperature threshold, the water is diverted into the other accumulation.

2. Method according to claim 1, applied to M accumulations of water, M >= 3, wherein
the measured water temperature is compared with M increasing temperature thresholds Sᵢ, 1 <= i <= M, which define M+1 temperature ranges, and
the flow of water is diverted
- towards the drainage route if the measured water temperature is lower than the lowest temperature threshold S₁ among the M thresholds,
- inside the j-th accumulation, 1 <= j <= M-1, if the measured water temperature is higher than the j-th temperature threshold Sⱼ and lower than the (j+1)-th temperature threshold Sⱼ₊₁, and
- inside the M-th accumulation if the measured water temperature is greater than the highest temperature threshold S_{M}.

3. Method according to claim 1 or 2, wherein the aforementioned decision to divert the water flow, and/or the calculation of the order relationship and/or the relative comparison between temperature values, takes place via an electronic circuit.

4. Method according to any preceding claim, wherein heat is withdrawn from the water of the accumulations to transfer it to the water of a water circuit.

5. Method according to claim 4, wherein the water circuit originates from a public aqueduct and ends in a boiler or furnace.

6. Method according to claim 4 or 5, wherein heat is taken from the water of each accumulation by sequentially passing through the water contained in one or each accumulation.

7. Method according to claim 6, wherein the accumulations are passed through in sequence respecting a sequence of increasing temperature of the water contained in them, so that, upon leaving one accumulation, another accumulation with water at a higher temperature is always encountered.

8. System or installation for recovering heat from waste water within a waste conduit, comprising:
- two water tanks,
- a sensing device for determining the temperature of the water sent down the conduit,
- a diverter device configured to divert the path of the water flowing inside the conduit in order to send it inside one of the tanks or towards a drainage route.

9. System or plant according to claim 8, comprising:
an electronic circuit configured for controlling the diverter device as a function of the comparison between the temperature detected by the sensing device and temperature thresholds, so that
- if the measured water temperature is lower than a first temperature threshold, the electronic circuit controls the diverter device so that the water is diverted into the drainage route,
- if the measured water temperature is higher than the first temperature threshold but lower than a second temperature threshold higher than the first, the electronic circuit commands the diverter device so that the water is diverted into one of the two tanks, and
- if the measured water temperature in the conduit is higher than the second temperature threshold, the electronic circuit controls the diverter device so that the water is diverted to the other storage tank.

10. System or installation according to claim 8 or 9, comprising:
- heat exchangers installed inside some of the tanks or each tank, and
- a water circuit configured to draw heat from the water in the storage tanks by passing in sequence through the heat exchangers contained in the storage tanks.
